# EUROPEAN PATENT APPLICATION

(11) **EP 2 782 025 A2**
(43) Date of publication of application: **24.09.2014**
(21) Application number: 14158375.7
(22) Date of filing: 07.03.2014
(51) Int. Cl.: G06F 17/22

(54) **Communication apparatus, method, system and program for encoding/decoding structured documents**

(30) Priority: 18.03.2013 JP 2013055082
(71) Applicant: Kabushiki Kaisha Toshiba, Tokyo 105-8001 (JP)
(72) Inventor: Doi, Yusuke, Tokyo, 105-8001 (JP)
(74) Representative: HOFFMANN EITLE

(57) **Abstract**

According to one embodiment, a communication apparatus (1) includes a first storage (15), a decision unit (14) and a first processing unit (16). The first storage (15) stores a plurality of first device type identifiers and a plurality of first structured document code grammars in association with each other. The decision unit (14) decides a device type of a communication object. The first processing unit (16) selects, from the first storage (15), a second structured document code grammar that corresponds to a second device type discrimination code of the device type, and performs at least one of encoding a structured document and decoding a received structured document code, by using the second structured document code grammar.

## Description

### FIELD

Embodiments described herein relate generally to a communication apparatus, method, system and program.

### BACKGROUND

Extensible markup language (XML) compatible data processing by device nodes, such as meters, can be efficiently performed by utilizing efficient XML interchange (EXI). EXI is a binary representation of XML. EXI constitutes an interface when applications perform communication between device nodes.

### BRIEF DESCRIPTION OF THE DRAWINGS

FIG. 1 is a diagram illustrating a communication system according to an embodiment;
FIG. 2 is a conceptual diagram illustrating a structure prescription reduction;
FIG. 3 is a block diagram illustrating a server side communication apparatus according to an embodiment;
FIG. 4 is a diagram illustrating a simple example of a reduced structure prescription;
FIG. 5 is a diagram illustrating an instance example of a reduced structure prescription;
FIG. 6 is a diagram illustrating a concrete example of reduction processing (optional element and attribute omission);
FIG. 7 is a diagram illustrating another concrete example of reduction processing (change from indirect referencing to direct referencing);
FIG. 8 is a diagram illustrating another concrete example of reduction processing (type integration);
FIG. 9 is a flow chart illustrating a processing sequence of a structure prescription reduction engine according to an embodiment;
FIG. 10 is a diagram illustrating a communication system according to another embodiment;
FIG. 11 is a diagram illustrating a cross referencing relationship of functions in OASIS EI;
FIG. 12A is a diagram illustrating a reduction processing result according to an present example;
FIG. 12B is a diagram illustrating the reduction processing result according to the present example;
FIG. 12C is a diagram illustrating the reduction processing result according to the present example;
FIG. 13 is a diagram illustrating a standard structure prescription according to another present example;
FIG. 14 is a diagram illustrating an instance example of a standard structure prescription according to the other present example;
FIG. 15 is a diagram illustrating a reduction processing result according to the other present example; and
FIG. 16 is a diagram illustrating an instance example of a reduction processing result according to the other present example.

### DETAILED DESCRIPTION

Embedded device nodes receive various restrictions and their functions are limited. It is required to optimize interface definitions installed in such embedded device nodes type by type, i.e., according to the respective device types.

In general, according to one embodiment, a communication apparatus includes a first storage, a decision unit and a first processing unit. The first storage is configured to store a plurality of first device type identifiers and a plurality of first structured document code grammars in association with each other, each of the first structured document code grammars corresponding to each of the first device type identifiers. The decision unit is configured to decide a device type of a communication object. The first processing unit is configured to select, from the first storage, a second structured document code grammar that corresponds to a second device type discrimination code of the device type, and to perform at least one of encoding a structured document and decoding a received structured document code, by using the second structured document code grammar, the second device type discrimination code being included in the first device type identifiers, the second structured document code grammar being included in the first structured document code grammars.

A communication apparatus includes a first storage, a second storage, a reduction engine and a third storage. The first storage is configured to store a standard structure prescription which indicates structure prescription utilized in the application side. The second storage is configured to store a type-dependent data design necessary for a device type, the type-dependent data design indicating at least one of an element of a structured document and an attribute of the structured document. The reduction engine is configured to perform reduction of the standard structure prescription in accordance with the type-dependent data design to generate a reduced structure prescription. The third storage is configured to store a device type discrimination code of the device type and a structured document code grammar which is based on the reduced structure prescription, in association with each other. The structured document code grammar is selected for communicating with an object of the device type.

A communication apparatus, method, system and program according to embodiments will now be described in detail with reference to the accompanying drawings. In the following embodiments, portions denoted by the same reference symbols are conceived to perform operations in the same way, and their repetitive descriptions will be suitably omitted.

In the embodiments explained below, it is assumed that structured documents are based on an extensible markup language (XML), structure prescriptions are based on XML schema, and structured document codes are based on an efficient XML interchange (EXI). However, the embodiments are not limited only to applications to an apparatus, method, system, and program that utilize XML, XML schema, and EXI.

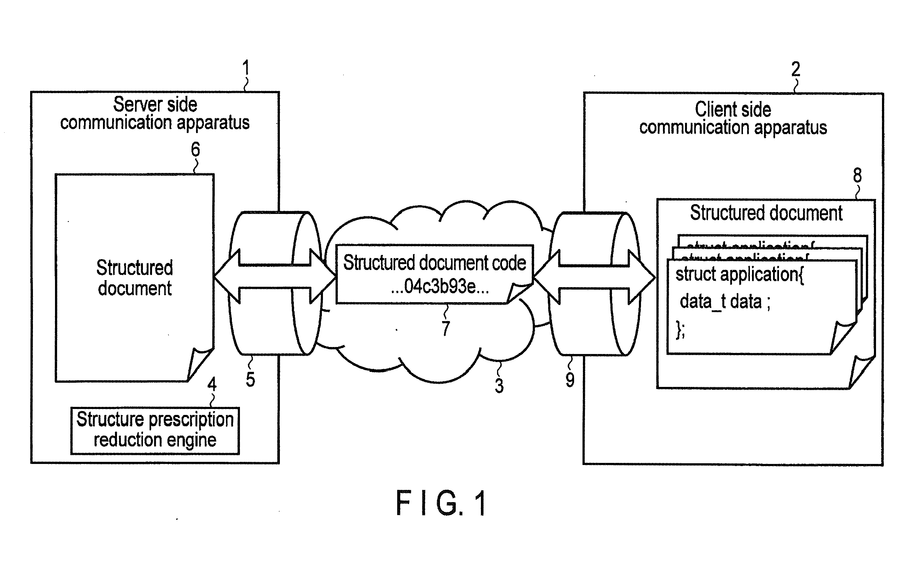

FIG. 1 is a diagram illustrating a communication system according to an embodiment. In this system, a server side communication apparatus 1 and a client side communication apparatus (which will be referred to as "embedded device" hereinafter) 2 are connected to each other through a network 3. FIG. 1 shows only one embedded device 2, but a plurality of embedded devices 2 of different types are connected to the server side communication apparatus 1. The server side communication apparatus 1 communicates with each of the embedded devices 2 by use of an interface optimized for this embedded device 2 depending on its type.

The communication between the server side communication apparatus 1 and each of the embedded devices 2 is performed by utilizing a structured document code 7. For example, each of the embedded devices 2 generates the structured document code 7, in accordance with the grammar of the structured document code, from the structured document 8 containing data measured by this device or apparatus. The structured document code 7 thus generated is sent from a communication unit 9 of the embedded device 2 through the network 3 to a communication unit 5 of the server side communication apparatus 1. The server side communication apparatus 1 decodes the received structured document code 7 and thereby obtains a structured document 6. The structured document 6 is delivered to an application for processing this document.

A structure prescription reduction engine 4 has a plurality of interface definitions optimized for the embedded devices 2 depending on their types, and is configured to select an appropriate interface definition for use in accordance with the type of an embedded device 2 with which it performs communication. The communication interface between the server side communication apparatus 1 and each of the embedded devices 2 is compliant with the grammar (interface definition) of the corresponding structured document code. The grammar of the structured document code is based on the structure prescription for the structured document. For example, in the designing stage before the embedded devices 2 are connected for the first time, the structure prescription reduction engine 4 performs reduction of such structure prescriptions and thereby generates structure prescriptions for the embedded devices 2 depending on their types. Based on each of the reduced structure prescriptions, the grammar of the structured document code of the relevant embedded device 2 is generated. Each of the structure prescriptions defines a data expression used when communication is performed, but, in view of each embedded device, the standard structure prescription includes a lot of wasteful parts. Each of the reduced structure prescriptions is prepared such that wasteful parts are removed from the corresponding standard structure prescription.

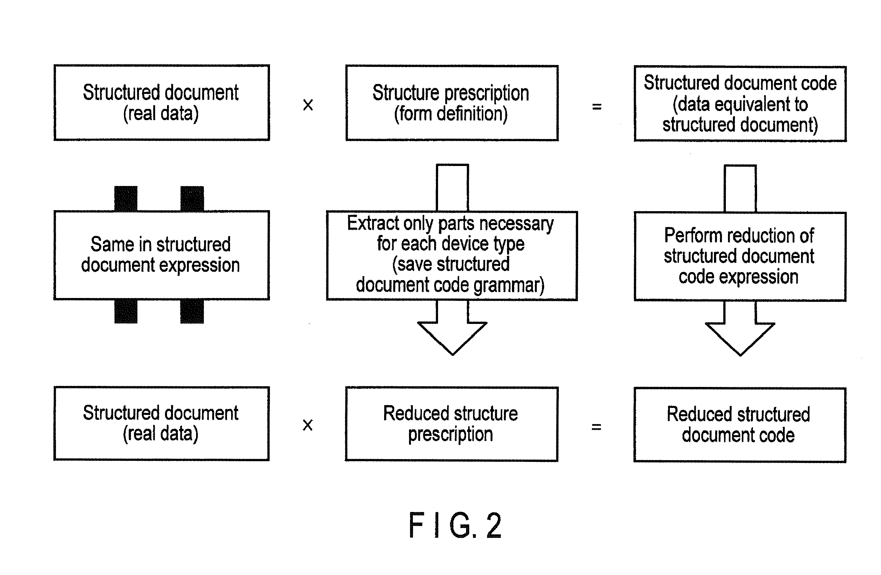

FIG. 2 is a diagram illustrating the concept of performing reduction of a structure prescription depending on the device type. In FIG. 2, the upper part shows a case where reduction is not performed, for comparison, and the lower part shows a case where reduction is performed.

Where reduction of structure prescriptions is not performed, a structure prescription (form definition) is applied to each structured document (real data) to obtain a structured document code (data equivalent to the structured document). Where reduction of structure prescriptions is performed, a reduced structure prescription is applied to each structured document (real data) to obtain a reduced structured document code. The reduced structure prescription is formed by extracting only the parts necessary for each of the device types, and thus it serves to save the grammar of the structured document code.

Further, where reduction of structure prescriptions is not performed, the same structured document and structured document code come to be used for all the device types. Where reduction of structure prescriptions is performed, the same structured document comes to be used for all the device types, but different structured document codes come to be used depending on the device types. Namely, it can be said that the server side is integrative while each client side is optimized.

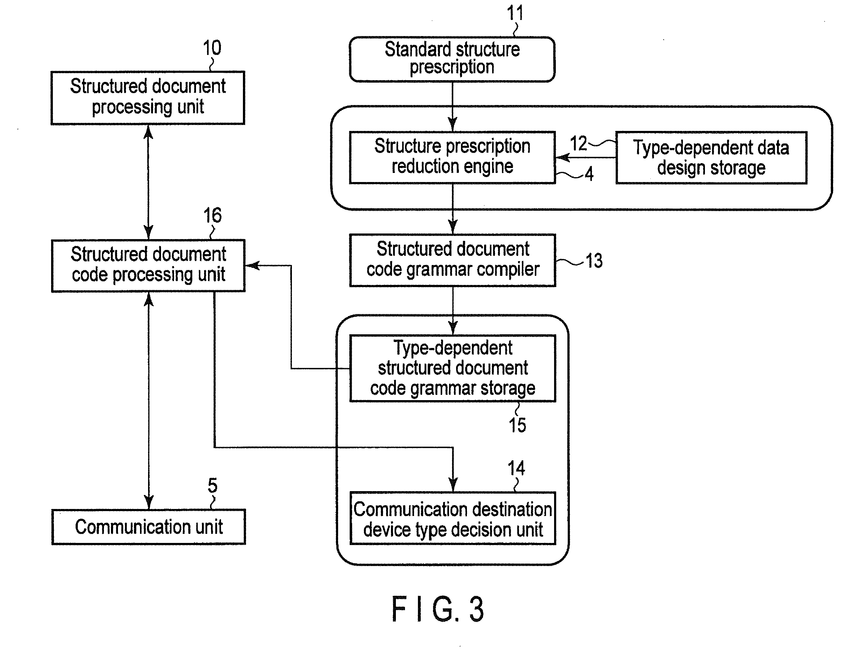

FIG. 3 is a block diagram illustrating the server side communication apparatus.

A structured document processing unit 10 corresponds to an application described by a user. Receiving a structured document defined by the application as an input, the processing unit 10 performs transaction of data, such as processing, storing, and referencing, and to output a structured document.

A standard structure prescription 11 is a structure prescription utilized in the application side. The standard structure prescription 11 is determined by a specific application or communication rules attached to this application.

A type-dependent data design storage 12 stores a plurality of data designs corresponding to a plurality of embedded devices 2 with which this system performs communication. The type dependent means "device-type-dependent". Each of the data designs describes, based on a given standard structure prescription, what kind of messages to be used for input and output. The data designs includes a list of root elements of structured documents with which input and output of the individual embedded devices 2 may be meaningful, and a list of elements and attributes that may be accessed by the individual elements.

Based on the standard structure prescription 11 and a type-dependent data design from the type-dependent data design storage 12, the structure prescription reduction engine 4 generates a reduced type-dependent structure prescription (structure prescription reduction). A concrete method for generating a type-dependent structure prescription will be explained in detail later.

A structured document code grammar compiler 13 converts a type-dependent structure prescription, which is generated by the structure prescription reduction engine 4, into a structured document code grammar. This conversion may utilize a method described in a reference literature [1]: John Schneider and Takuki Kamiya, Efficient XML Interchange (EXI) Format, W3C Recommendation, 2011.

A communication destination device type decision unit 14 decides the device type of a communication destination, based on information (for example, the IP address, HTTP header, etc.) given by the communication destination, and to return a device type discrimination code.

A type-dependent structured document code grammar storage 15 stores device type identifiers and corresponding structured document code grammars in association with each other. For transmission and reception, the same structured document code grammar or different structured document code grammars may be used. Further, a structure prescription ID may be assigned to each structured document code grammar. When a structured document is encoded, and when a structured document code is decoded into a structured document, an appropriate structured document code grammar can be referenced by use of a structure prescription ID.

A structured document code processing unit 16 receives a structured document code input from the communication unit 5, decodes it in accordance with a structured document code grammar that corresponds to the device type of a communication destination, and delivers the structured document thus decoded to the structured document processing unit 10. Further, the processing unit 16 is configured to receive a structured document input from the structured document processing unit 10, to encode it in accordance with a structured document code grammar that corresponds to the device type of a communication destination, and to output it to the communication unit 5.

The communication unit 5 is used to perform communication with the embedded devices 2. A structured document code (specifically, its message) 7 input from the network 3 shown in FIG. 1 to the communication unit 5 is decoded by the structured document code processing unit 16. The structured document code (specifically, its message) 7 output from the structured document processing unit 10 through the structured document code processing unit 16 is transmitted from the communication unit 5 through the network 3 to the relevant embedded device 2.

### [Structure prescription reduction]

In this specification, a series of operations for performing structure prescription reduction while maintaining the expression of a structured document is called "structure prescription reduction". This is a series of operations made in light of the fact that many embedded devices 2 are restricted in function, and so they access only part of the type space defined by each standard structure prescription.

In general, the standard structure prescription 11 is constructed along with some flexibility. The structure prescription reduction engine 4 reduces such a standard structure prescription 11 into a type-dependent structure prescription under the following conditions.
1. A structured document converted from a structured document code in accordance with a structured document code grammar based on the type-dependent structure prescription has exactly the same expression as that of a structured document converted from the structured document code in accordance with a structured document code grammar based on the standard structure prescription 11. Further, this structured document can be verified in terms of its validity (as being valid) by the standard structure prescription 11.
2. All the elements to which an embedded device 2 of a certain device type needs to access are included in the structure prescription for this certain device type.

In order to generate a type-dependent structure prescription, a type-dependent data design is required. A concrete example of a type-dependent data design is as follows. This concrete example is based on the structure prescription of OASIS Energy Interop (see a reference literature [2]: David Holmberg and William T. Cox, Energy interoperation version 1.0, OASIS Committee Specification 02, February, 2012), and includes an eiEvent element included in elements of Events and a list of elements that may be accessed therein, i.e., an event ID, modification Number, dtstart, duration, signal Float, group ID, and signal Type.
Event ID: an ID for identifying an event,
/Events/eiEvent/eventDescriptor/eventID/text();
Modification Number: the number of modifications of the event,
/Events/eiEvent/eventDescriptor/modificationNumber/tex t();
Dtstart: the starting time of the event,
/Events/eiEvent/eiEventSignals/eiEventSignal/ic:dtstar t/ic:date-time/text();
Duration: the duration time of the event,
/Events/eiEvent/eiEventSignals/eiEventSignal/ic:durati on/text();
Signal Float: a target value of power consumption (base line ratio),
/Events/eiEvent/eiEventSignals/eiEventSignal/intervals /interval/signalPayload/payloadFloat/value/text(); and
Group ID: an ID for identifying a customer group as a target of electricity saving target,
/Events/eiEvent/eiEventSignals/eiEventSignal/eiTarget/ groupID/text().

This concrete example of a type-dependent data design indicates to access that part of a structured document which is denoted by "target" (XPath expression). Further, it indicates the meanings of the respective items of each key in this example. In this respect, the specification of Japanese Patent Application No. 2011-70193, which was filed by the same applicant of this application, discloses an example of an encoder for structured document codes based on a type-dependent data design of this kind.

Although not concretely mentioned here, the standard structure prescription 11 defined and referenced in the reference literature [2] is a gigantic definition set of 78 files that forms totally 18,000 lines. This prescription includes therein the definitions of physical units, the ISO definitions of monetary units, or the definitions of geographic location information. In general, since embedded devices rarely access these definitions at their own levels, it is possible to achieve remarkably high efficiency by performing the reduction.

### [Reduced structure prescription: reduction encoding for reception at embedded device]

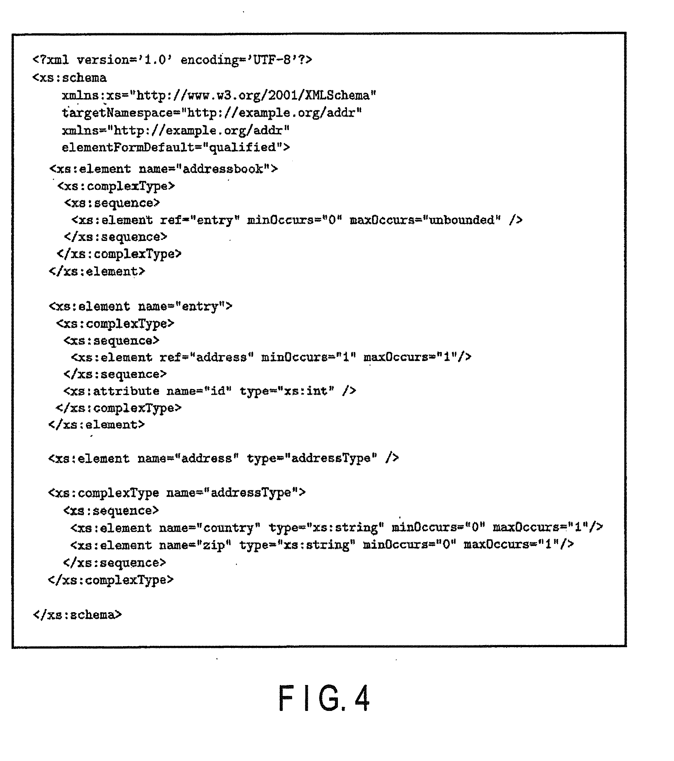

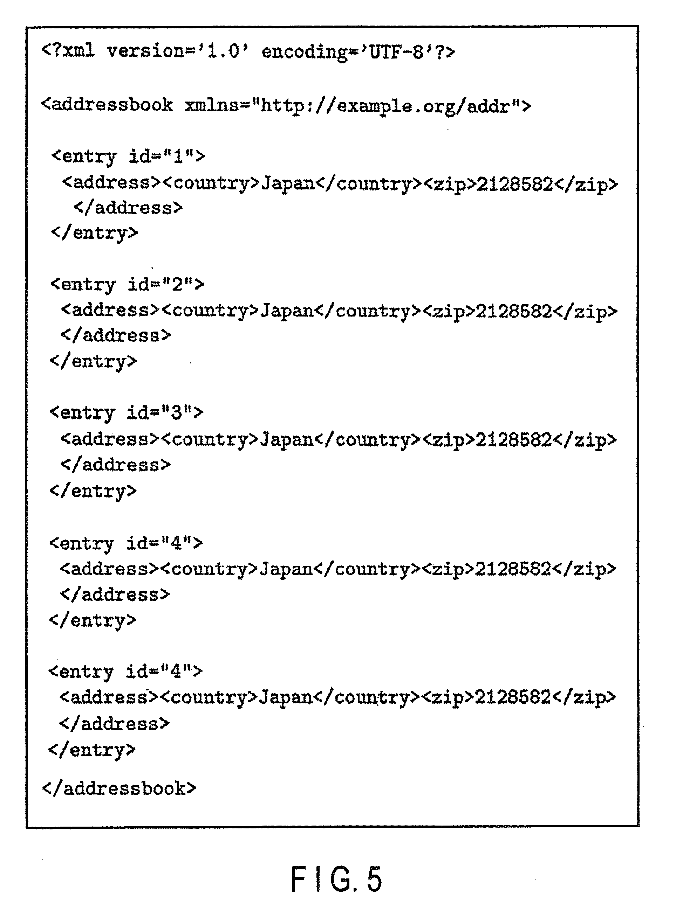

FIG. 4 is a diagram illustrating a simple example of a reduced structure prescription. FIG. 5 is a diagram showing an instance example. This exemplifies a present example in which the structured document code processing unit 16 filters out elements that do not fit and are not to be accessed on the data reception side (embedded device side) to decrease the communication amount and to reduce processing of the device side implementations. This example assumes a case to obtain ZIP codes and to send data to a meter for counting the numbers of people in respective areas.

This example is made by performing reduction processing to exclude any element other than the elements to which the reception side embedded device 2 accesses. It should be noted in this case that the structured document sent to the reception side embedded device 2 from the structured document processing unit 10 is based on the standard structure prescription, but the structured document code sent to the embedded device 2 cannot be verified in terms of its validity by the standard structure prescription. In this case, it is necessary for the structured document code processing unit 16 to ignore elements that cannot be described by the type-dependent structure prescription.

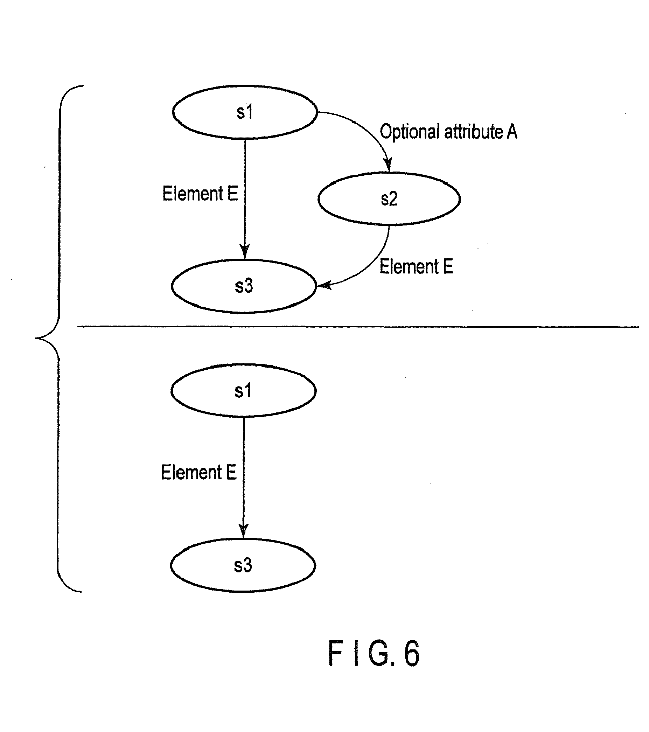

Next, an explanation will be given of a concrete method for generating a reduced structure prescription by the structure prescription reduction engine 4, with reference to FIGS. 6 to 8.

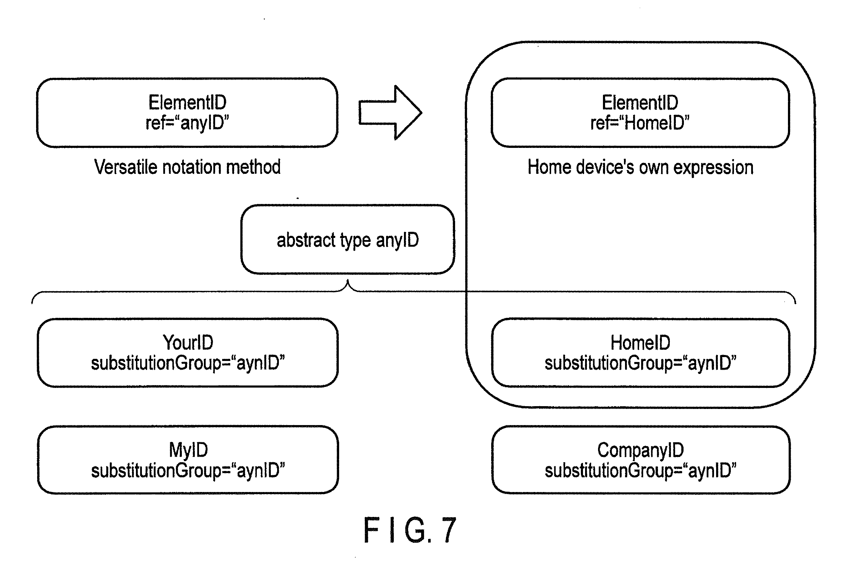

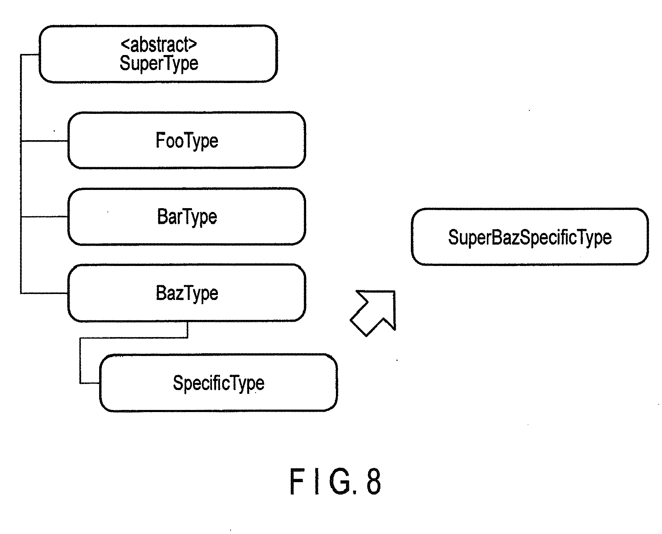

For example, reduction processing may include: 1. Optional element and attribute omission (FIG. 6); 2. Change from indirect referencing to direct referencing (FIG. 7); 3. Type integration (FIG. 8); and 4. Wildcard fixing. In an embodiment, all of these processes are performed in reduction processing, and in another embodiment, any one of these processes is performed in reduction processing. In this respect, effective reduction processing conditions are those described previously, but reduction processing is not limited to them.

### 1. Optional element and attribute omission:

As regards an element with minOccur = 0 and/or an optional attribute, they may be set to appear or not to appear in a structured document. If it turns out, from a type-dependent data design to be an input, that a certain attribute and a certain element and its child elements are not accessed, this certain attribute and this certain element can be removed from the structure prescription.

For example, as shown in FIG. 6, reduction of the structure prescription is performed by removing s2, which is an optional element.

### 2. Change from indirect referencing to direct referencing:

By use of a Substitution Group, it is possible to diversify the child elements of a certain element. However, depending on the type-dependent data design, there is a case where this diversification may be limited. For example, as shown in FIG. 7, even in a case where various kinds of IDs can be substituted by a Substitution Group named "anyID", if the relevant device type accesses only an ID defined by a type named (for example) "HomeID", it is possible to replace the referencing to the Substitution Group "anyID" with direct referencing to "HomeID". Similarly, the diversification of Sub-Type can be replaced with a direct definition.

### 3. Type integration:

There is a case where a type definition is set to have abstraction levels formed of a plurality of phases from an abstract type to a concrete type, so that it becomes flexible. However, as for a specific device type, it suffices if only a specific concrete type can be utilized. Abstract types not referenced by other devices can be simplified by integrating them with the concrete type definition. FIG. 8 is a diagram illustrating an example in which a type named "specificType" for use is simplified to "SuperBazSpecificType" by integration.

### 4. Wildcard fixing:

In the case of a message format that frequently uses a wildcard and dynamic schema extension, such as XMPP (Extensible Messaging and Presence Protocol, IETF RFC6120), it is possible to integrate structure prescriptions based on a type-dependent data design.

Specifically, this is a scheme to determine only a framework in advance as a message format prescription, and allow a concrete communication message to dynamically reference another structure prescription by use of another namespace definition. For structured documents, this function can be utilized by designating "processContent="lax"" or the like in the wildcard definition (xs: anyType). For structured document codes, the wildcard definition is encoded by an inefficient method called "Built-in Grammar".

This method consumes a larger amount of memory and/or band, and so it is not suitable for the embedded devices 2. Accordingly, if extension elements that may be accessed by the relevant embedded device 2 are clarified from the type-dependent data design, a structure prescription can be defined such that it includes all the structure prescriptions defining these extension elements, and then this prescription is subjected to reduction to form a type-dependent structure prescription. Consequently, it is possible to achieve communication optimum to each device type, while utilizing an encoding manner (Schema-Informed Grammar) efficient for all of the wildcard definitions.

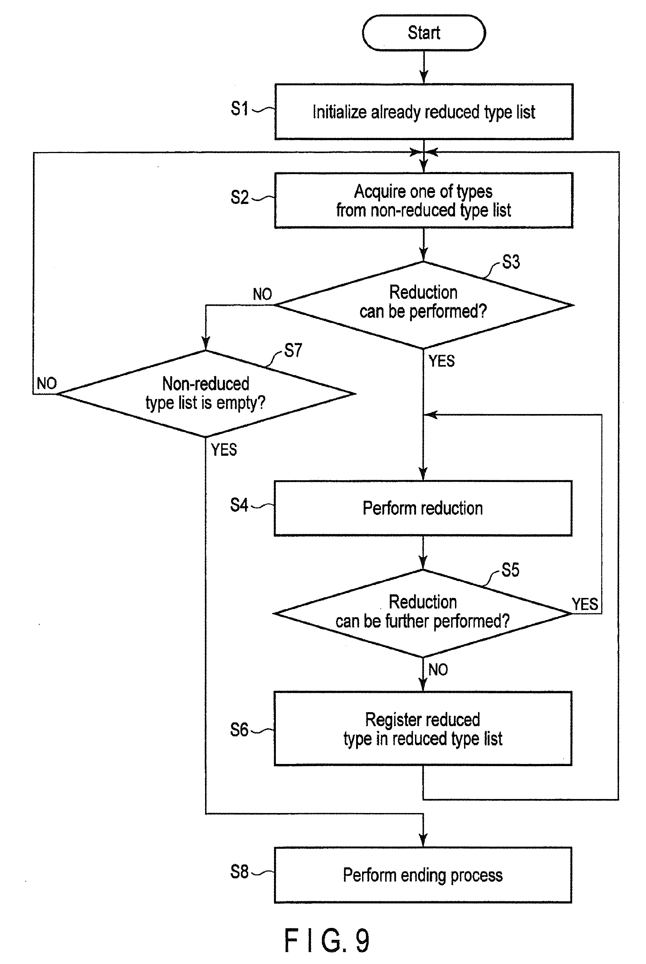

The structure prescription reduction engine 4 stops its actual algorithm after it sequentially performs the above described reduction processing until it cannot perform reduction any more. FIG. 9 is a flow chart illustrating a simple manner thereof.

At first, the root element of a structured document for use and a function list for use ("req" expressed by a list of XPath) are input. This list is based on a type-dependent data design. Further, an already reduced type list is initialized (step S1). Then, one of the types is acquired from a non-reduced type list (step S2).

Then, a decision is made of whether or not reduction can be performed on the type acquired in the step S2 (step S3). If reduction can be performed, reduction of this type is performed (step S4). The processing of step S4 is repeated as far as reduction can be performed (step S5). The type thus reduced is registered in a reduced type list (step S6).

The processes of steps S2 to S6 are repeated until the non-reduced type list becomes empty (step S7). When all of the types are acquired and the non-reduced type list becomes empty, an ending process is performed (step S8). The reduced type list includes all of the necessary reduced types, which are all output. Then, the definition and type of the root element are output, which is followed by the ending.

According to the embodiment described above, the interface definition (structured document code grammar) used for communication can be transformed such that only an interface part definition utilized in common by the two nodes in question (the server side communication apparatus 1 and the embedded device 2) is left in the interface definition. This is achieved by performing reduction of the structure prescription.

The server side communication apparatus 1 is a node abundant in resources, but it can perform communication in accordance with an interface definition optimized to each node of the communication object. Such transformation of the interface definition only affects data serialization, and does not affect the internal data expression (for example Document Object Model based on XML).

Specifically, by use of interface selection included in a processing program executed by the server side communication apparatus 1, it is possible to achieve a communication function using minimum hardware resources, which is compatible with the device type of the client side communication apparatus 2 often constituted as an embedded device. In this case, for the client side communication apparatus 2, it is possible to decrease the memory consumption amount, message size, and processing time by optimization of the structured document code grammar to be optimum to each device. Further, for the server side communication apparatus 1, it is possible to address optimization of the structured document code grammar, without changing the API on the structured document application side.

Incidentally, the respective components of the communication system according to the embodiment, which include the structure prescription reduction engine 4 described above, can be implemented as a computer program. The program is recorded in and provided as a computer readable recording medium, such as a CD-ROM, CD-R, or DVD, or it is in advance embedded in and provided as a ROM or the like.

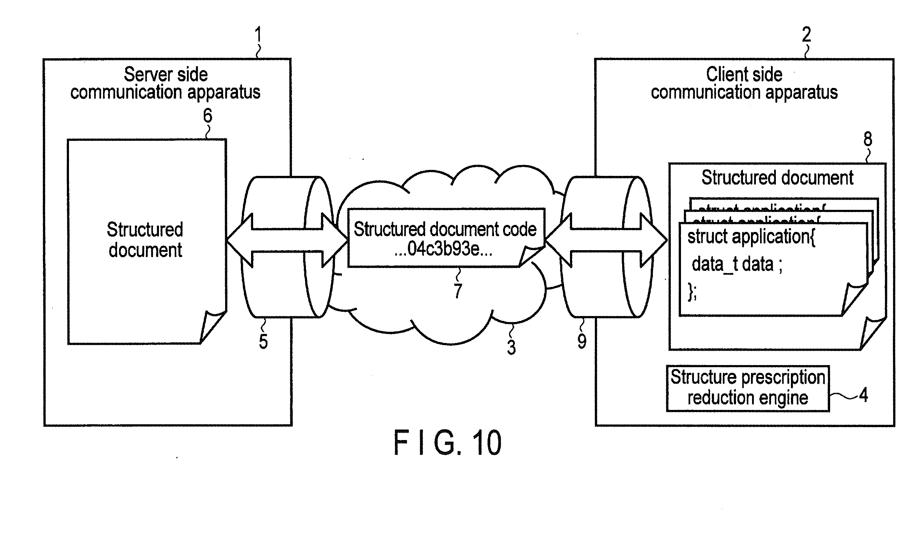

Further, the embodiment described above is explained as an example (FIG. 1) in which the structure prescription reduction engine 4 is implemented in the server side communication apparatus 1, but the structure prescription reduction engine 4 may be implemented in the client side communication apparatus 2, as shown in FIG. 10. In this case, a structure prescription to be utilized is uploaded from the client side communication apparatus 2 to the server side communication apparatus 1. Alternatively, the URL (schema Location) of a structure prescription to be utilized is notified from the client side communication apparatus 2 to the server side communication apparatus 1. Then, the server side communication apparatus 1 acquires the structure prescription by use of this URL. Alternatively, the Id of a structure prescription to be utilized is notified from the client side communication apparatus 2 to the server side communication apparatus 1. Then, the server side communication apparatus 1 acquires the relevant structure prescription from a repository by use of this Id.

### [Present examples]

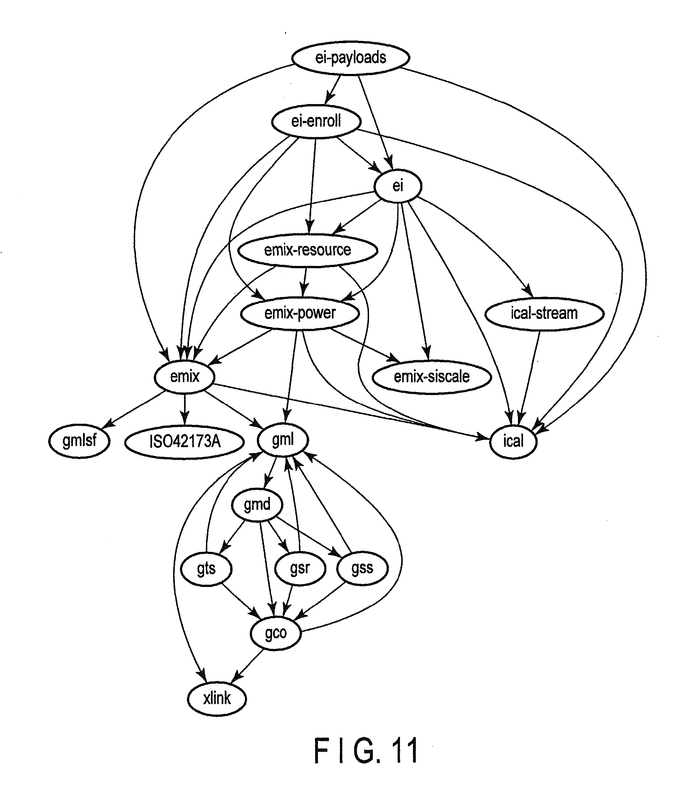

Next, an explanation will be given of a present example in which reduction of an eiEvent element is preformed in OASIS Energy Interop (which will be referred to as "OASIS EI" hereinafter; see the reference literature [2] reference). OASIS EI is a scheme that achieves various functions required in the energy market. FIG. 11 is a diagram illustrating a cross referencing relationship of functions in OASIS EI. Although not explained here in detail, it is shown that ei-payloads serve as a foundation, and specifications, such as ei-enroll and ei, are dependent on emix (energy exchange specification), ISO42173A (currency specification), ical (calendar specification), gml (geographic location information specification), and so forth.

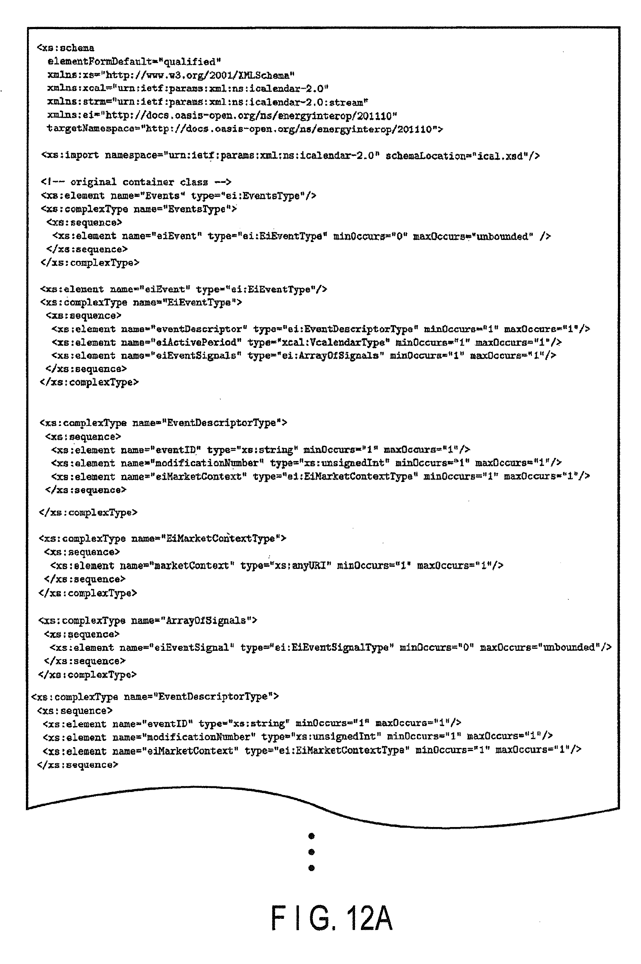

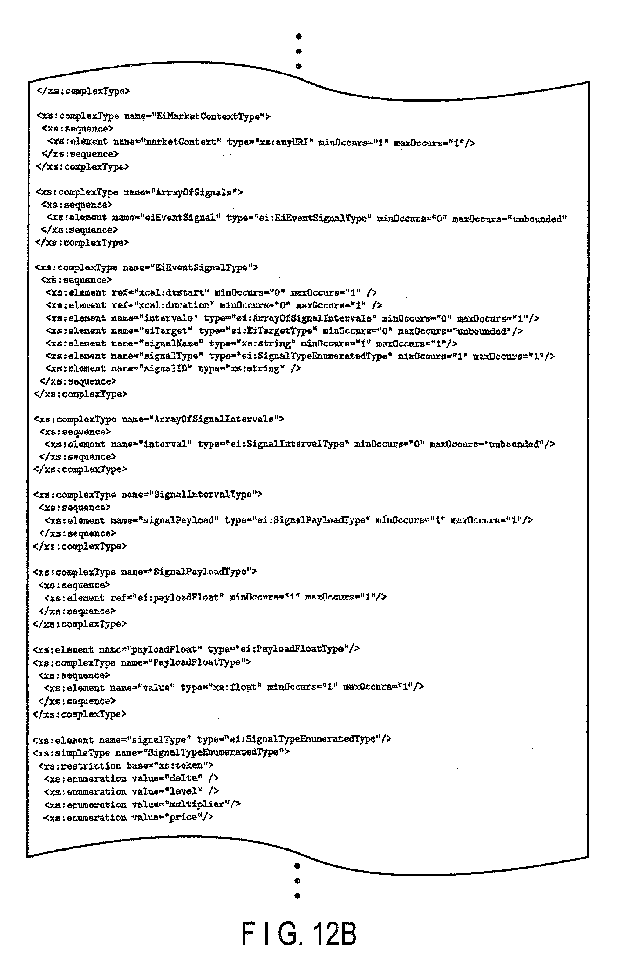

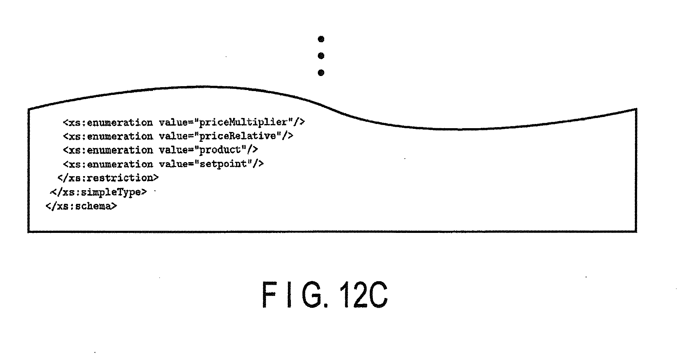

Here, an embedded device apparatus X is considered with a design to control an air conditioner when it receives demand response information, and particularly only when it receives a power amount ratio. In order to achieve this design, it suffices if the apparatus receives the eiEvent element of an Events message. The information described by each eiEvent element is specified as "event". For example, as in the type-dependent data design described above, a type-dependent data design is provided for the apparatus X (embedded device 2). When reduction is performed by use of the type-dependent data design of the apparatus X, a structure prescription is obtained, for example, as shown in FIGS. 12A to 12C.

In the server side communication apparatus 1 of this system, the type-dependent data design of the apparatus X is used to generate a reduced type-dependent structure prescription, and then this structure prescription is used to generate a type-dependent structured document code grammar. The type-dependent structured document code grammar is introduced into the relevant device type X and utilized for communication with the server side communication apparatus 1. The apparatus X provides a code that corresponds to the device type X, at the HTTP header or structured document code header, to show its own device type. Specifically, such a manner is adopted that it provides a parameter, such as "dev=X", at the Content-Type of the HTTP header, or it provides a type-dependent structure prescription identifier, such as "app0+devX", at the schema Id of the structured document code header.

The server side communication apparatus 1 of this system responds to communication from the apparatus X by utilizing a type-dependent structured document code grammar that corresponds to the apparatus X. This type-dependent structured document code grammar is the same as the structured document code grammar introduced into the apparatus X. As a result, it is possible to utilize a structured document code grammar optimized to the client side communication apparatus 2 including each embedded device, and, at the same time, to perform integrative processing (which conceals type-dependent optimized processing) in the structured document processing unit 16.

### [Concrete example 1 of reduced structure prescription]

FIGS. 12A to 12C are diagrams illustrating an example in which, based on the type-dependent data design described above, reduction is performed on a structure prescription group disclosed in the reference literature [2]. This is a derivative literary work made based on OASIS EI (see the reference literature [2]), which is a disclosed specification, and so the original copyright belongs to an organization for the advancement of structured information standards (OASIS).

### [Concrete example 2 of reduced structure prescription]

By way of example, an explanation will be given of examples of performing reduction of a simple standard structure prescription (XML schema).

### <Standard structure prescription>

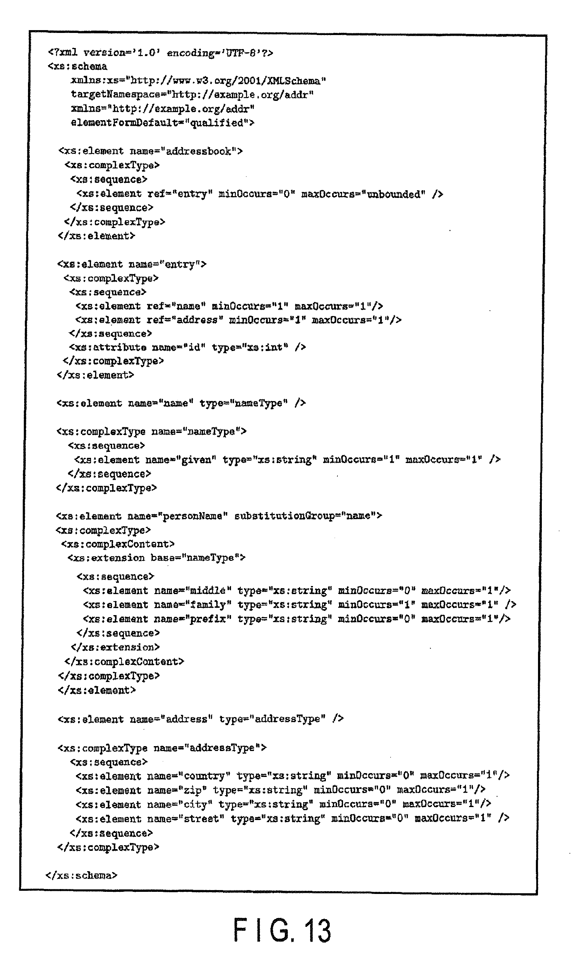

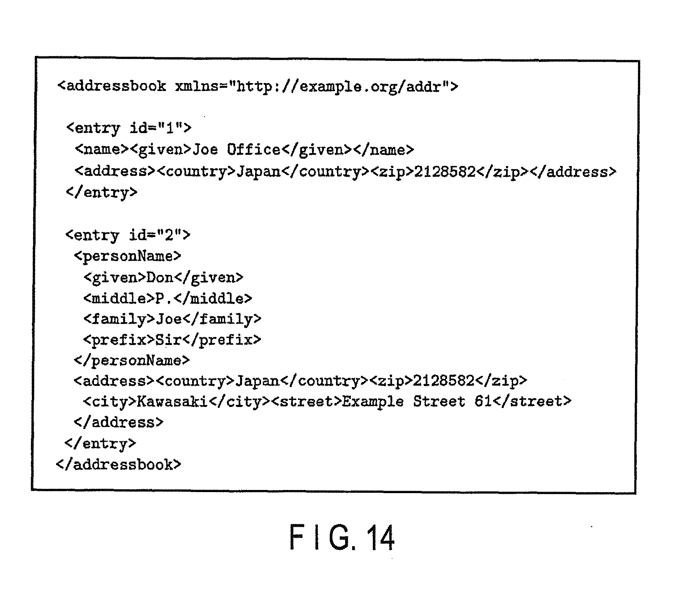

FIG. 13 is a diagram illustrating an XML schema of an imaginary address book. FIG. 14 is a diagram illustrating an imaginary XML document instance. This XML schema is flexible to some extent, as shown in its example. Specifically, "personName" includes "given (name)", "middle (middle name)", "family (family name)", and "prefix (honorific title)", and so the notation method of personal names has some flexibility.

### <Reduced structure prescription: within range not to change expression>

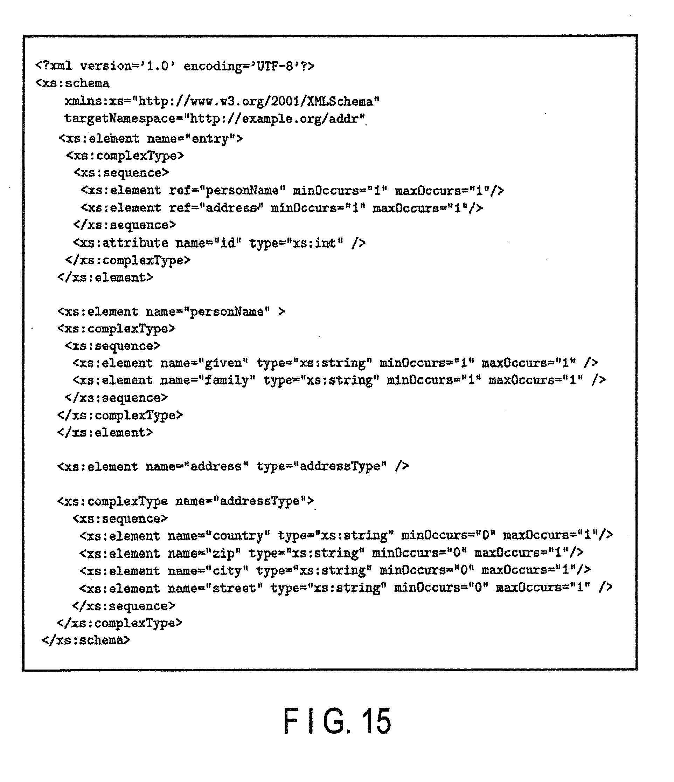

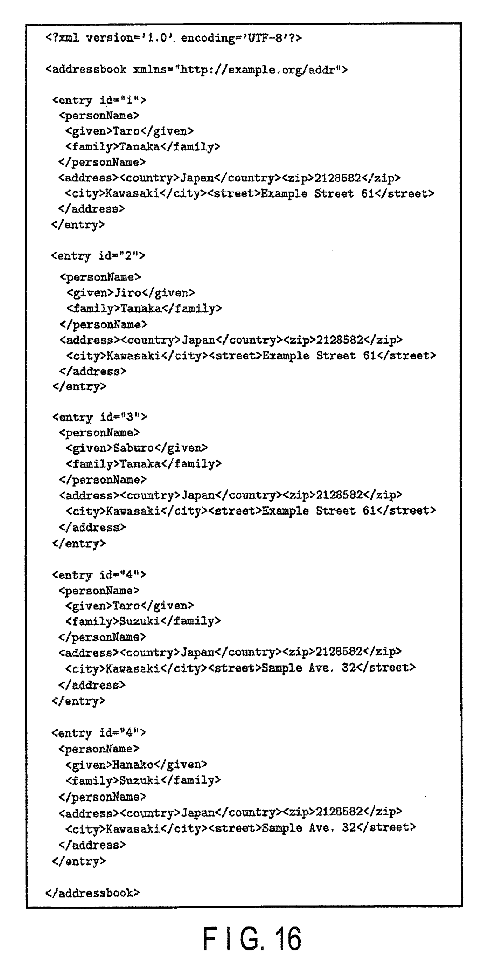

Here, it is provided that address book applications for Japan always use family and given names but do not use any prefix (honorific title). In this case, a reduction schema can be created, as shown in FIG. 15. FIG. 16 is a diagram illustrating an instance example thereof.

The flow charts of the embodiments illustrate methods and systems according to the embodiments. It will be understood that each block of the flowchart illustrations, and combinations of blocks in the flowchart illustrations, can be implemented by computer program instructions. These computer program instructions may be loaded onto a computer or other programmable apparatus to produce a machine, such that the instructions which execute on the computer or other programmable apparatus create means for implementing the functions specified in the flowchart block or blocks. These computer program instructions may also be stored in a computer-readable memory that can direct a computer or other programmable apparatus to function in a particular manner, such that the instruction stored in the computer-readable memory produce an article of manufacture including instruction means which implement the function specified in the flowchart block or blocks. The computer program instructions may also be loaded onto a computer or other programmable apparatus to cause a series of operational steps to be performed on the computer or other programmable apparatus to produce a computer programmable apparatus which provides steps for implementing the functions specified in the flowchart block or blocks.

While certain embodiments have been described, these embodiments have been presented by way of example only, and are not intended to limit the scope of the inventions. Indeed, the novel embodiments described herein may be embodied in a variety of other forms; furthermore, various omissions, substitutions and changes in the form of the embodiments described herein may be made without departing from the spirit of the inventions. The accompanying claims and their equivalents are intended to cover such forms or modifications as would fall within the scope and spirit of the inventions.

## Claims

1. A communication apparatus (1), **characterized by** comprising:
a first storage (15) configured to store a plurality of first device type identifiers and a plurality of first structured document code grammars in association with each other, each of the first structured document code grammars corresponding to each of the first device type identifiers;
a decision unit (14) configured to decide a device type of a communication object; and
a first processing unit (16) configured to select, from the first storage (15), a second structured document code grammar that corresponds to a second device type discrimination code of the device type, and to perform at least one of encoding a structured document and decoding a received structured document code, by using the second structured document code grammar, the second device type discrimination code being included in the first device type identifiers, the second structured document code grammar being included in the first structured document code grammars.

2. The apparatus according to claim 1, **characterized by** further comprising a second processing unit (10) configured to perform a processing of an application for the structured document by using an internal data expression of the structured document, the internal data expression being unchanged without reference to the plurality of first structured document code grammars corresponding to the first device type identifiers.

3. A communication apparatus, **characterized by** comprising:
a first storage (11) configured to store a standard structure prescription which indicates structure prescription utilized in the application side;
a second storage (12) configured to store a type-dependent data design necessary for a device type, the type-dependent data design indicating at least one of an element of a structured document and an attribute of the structured document;
a reduction engine (4) configured to perform reduction of the standard structure prescription in accordance with the type-dependent data design to generate a reduced structure prescription; and
a third storage (15) configured to store a device type discrimination code of the device type and a structured document code grammar which is based on the reduced structure prescription, in association with each other,
**characterized in that** the structured document code grammar is selected for communicating with an object of the device type.

4. The communication method, **characterized by** comprising:
storing, in a first storage (15), a plurality of first device type identifiers and a plurality of first structured document code grammars in association with each other, each of the first structured document code grammars corresponding to each of the first device type identifiers;
deciding a device type of a communication object; and
selecting, from the first storage (15), a second structured document code grammar that corresponds to a second device type discrimination code of the device type, and performing at least one of encoding a structured document and decoding a received structured document code, by using the second structured document code grammar, the second device type discrimination code being included in the first device type identifiers, the second structured document code grammar being included in the first structured document code grammars.

5. The method according to claim 4, **characterized by** further comprising performing a processing of an application for the structured document by using an internal data expression of the structured document, the internal data expression being unchanged without reference to the plurality of first structured document code grammars corresponding to the first device type identifiers.

6. A communication system comprising a first communication apparatus and a second communication apparatus connected to each other through a network,
either one of the first communication apparatus and the second communication apparatus, **characterized by** comprising:
a first storage (15) configured to store a plurality of first device type identifiers and a plurality of first structured document code grammars in association with each other, each of the first structured document code grammars corresponding to each of the first device type identifiers;
a decision unit (14) configured to decide a device type of a communication object; and
a first processing unit (16) configured to select, from the first storage (15), a second structured document code grammar that corresponds to a second device type discrimination code of the device type, and to perform at least one of encoding a structured document and decoding a received structured document code, by using the second structured document code grammar, the second device type discrimination code being included in the first device type identifiers, the second structured document code grammar being included in the first structured document code grammars,
**characterized in that** the other one of the first communication apparatus and the second communication apparatus communicates with the either one by using a third structured document code grammar corresponding to a device type of the other one.

7. A communication system comprising a first communication apparatus and a second communication apparatus connected to each other through a network,
either one of the first communication apparatus and the second communication apparatus, **characterized by** comprising:
a first storage (11) configured to store a standard structure prescription which indicates structure prescription utilized in the application side;
a second storage (12) configured to store a type-dependent data design necessary for a device type, the type-dependent data design indicating at least one of an element of a structured document and an attribute of the structured document;
a reduction engine (4) configured to perform reduction of the standard structure prescription in accordance with the type-dependent data design to generate a reduced structure prescription; and
a third storage (15) configured to store a device type discrimination code of the device type and a structured document code grammar which is based on the reduced structure prescription, in association with each other,
**characterized in that** the structured document code grammar is selected for communicating with an object of the device type, wherein the other one of the first communication apparatus and the second communication apparatus communicates with the either one by using a third structured document code grammar corresponding to a device type of the other one.

8. A computer readable medium including computer executable instructions, wherein the instructions, when executed by a processor, cause the processor to perform a method **characterized by** comprising:
storing, in a first storage (15), a plurality of first device type identifiers and a plurality of first structured document code grammars in association with each other, each of the first structured document code grammars corresponding to each of the first device type identifiers;
deciding a device type of a communication object; and
selecting, from the first storage (15), a second structured document code grammar that corresponds to a second device type discrimination code of the device type, and performing at least one of encoding a structured document and decoding a received structured document code, by using the second structured document code grammar, the second device type discrimination code being included in the first device type identifiers, the second structured document code grammar being included in the first structured document code grammars.

9. A non-transitory computer readable medium including computer executable instructions, wherein the instructions, when executed by a processor, cause the processor to perform a method **characterized by** comprising:
storing, in a first storage (11), a standard structure prescription which indicates structure prescription utilized in the application side;
storing, in a second storage (12), a type-dependent data design necessary for a device type, the type-dependent data design indicating at least one of an element of a structured document and an attribute of the structured document;
performing reduction of the standard structure prescription in accordance with the type-dependent data design to generate a reduced structure prescription; and
storing, in a third storage (15), a device type discrimination code of the device type and a structured document code grammar which is based on the reduced structure prescription, in association with each other,
**characterized in that** the structured document code grammar is selected for communicating with an object of the device type.
